# EUROPÄISCHE PATENTSCHRIFT

(11) **EP 2 727 288 B1**
(45) Veröffentlichungstag und Bekanntmachung des Hinweises auf die Patenterteilung: **10.06.2015**
(21) Anmeldenummer: 12713115.9
(22) Anmeldetag: 30.03.2012
(51) Int. Cl.: H04L 12/40, H04L 1/00, H04L 12/00

(54) **VERFAHREN UND SYSTEM ZUR ÜBERTRAGUNG VON DATEN IN EINEM KRAFTFAHRZEUG**
METHOD AND SYSTEM FOR TRANSMITTING DATA IN A MOTOR VEHICLE
PROCÉDÉ ET SYSTÈME DESTINÉS À LA TRANSMISSION DE DONNÉES DANS UN VÉHICULE À MOTEUR

(30) Priorität: 30.06.2011 DE 102011110968
(43) Veröffentlichungstag der Anmeldung: 07.05.2014
(73) Patentinhaber: Continental Automotive GmbH, 30165 Hannover (DE)
(72) Erfinder: MENZEL, Marc, 35096 Weimar (Lahn) (DE); STÄHLIN, Ulrich, 65760 Eschborn (DE)
(86) Internationale Anmeldenummer: PCT/EP2012/055784
(87) Internationale Veröffentlichungsnummer: WO 2013/000594

(56) Entgegenhaltungen:
- WO-A1-2012/016756
- GUSTAFSSON E ET AL: "A LITERATURE SURVEY ON TRAFFIC DISPERSION", IEEE NETWORK, IEEE SERVICE CENTER, NEW YORK, NY, US, Bd. 11, Nr. 2, 1. März 1997 (1997-03-01), Seiten 28-36, XP000683450, ISSN: 0890-8044, DOI: 10.1109/65.580915
- YEUNG R W ET AL: "Network Coding Theory", 1. Januar 2005 (2005-01-01), FOUNDATIONS AND TRENDS IN COMMUNICATIONS AND INFORMATION THEORY, NOW PUBLISHERS, US, PAGE(S) 241 - 381, XP007917634, ISBN: 978-1-933019-24-6 Part I: Single Source network coding

## Beschreibung

Die Erfindung betrifft ein Verfahren und ein System zur Übertragung von Daten in einem Kraftfahrzeug mittels nicht drahtgebundener Kommunikation, bei denen die Daten von einem ersten sendenden Datenknoten aufgeteilt und über mindestens zwei verschiedene Kommunikationsrouten zu einem zweiten empfangenden Datenknoten übertragen und beim Empfang wieder zusammengesetzt werden.

Üblicherweise sind Komponenten in aktuellen Fahrzeugen fast ausschließlich kabelgebunden miteinander verbunden, da die Störanfälligkeit von drahtlosen Kommunikationsverbindungen eine zuverlässige Kommunikation zwischen den einzelnen Komponenten im Fahrzeug häufig nicht zulässt.

Selbst eine Ultra-Wide-Band- Kommunikation (UWB-Kommunikation), die aufgrund ihrer verwendeten großen Frequenzbandbreite sehr robust gegenüber Störungen des Frequenzbands ist, kann eine ausreichend zuverlässige Kommunikation von Fahrzeugkomponenten in der Regel nicht leisten. Auch hier kann eine Kommunikationsverbindung zwischen zwei Komponenten unterbrochen werden, falls z. B. ein Verbindungsknoten ausfällt oder zwischen zwei Verbindungsknoten ein breitbandiger Dämpfer beispielsweise in Form einer Metallplatte eingebracht wird. Dies kann durchaus vorkommen, da sich die Kommunikationsbedingungen für die Drahtloskommunikation in einem Fahrzeug beispielsweise durch unterschiedliche Beladung ständig ändern können.

Daher findet in Kraftfahrzeugen meistens eine drahtgebundene Datenübertragung statt, bei der direkte Verbindungsleitungen zwischen den einzelnen Komponenten für eine entsprechende Kommunikation sorgen. Teilweise werden auch Kommunikations-Bussysteme eingesetzt, bei denen die Informationen der einzelnen Komponenten über ein gemeinsames Bussystem ausgetauscht werden. Ein solches Bussystem ist jedoch in der Installation und Pflege aufwändig, da neue Komponenten meist in das Bussystem eingemeldet werden müssen. Andererseits ist das Verlegen jeweils einzelner Kabelstränge zu allen Komponenten aufwändig und trägt aufgrund der meist verwendeten Kupferleitungen zu einem deutlich höheren Fahrzeuggewicht bei. Ferner erschwert es die Nachinstallation von Komponenten, da Kabelstränge nach Fertigstellung des Fahrzeugs nur noch unter großem Aufwand nachgezogen werden können.

Aus der DE 600 17 724 T2 sind ein System und Verfahren zum Übertragen von Daten über mehrere mögliche Kommunikationswege bekannt, die unterschiedliche Merkmale aufweisen. Bei der Datenübertragung werden die Merkmale der möglichen Kommunikationswege erfasst und der Datenfluss basierend auf diesen Informationen und auf einer durch den Benutzer gegebenen Optimierungsbedingung beispielsweise in Form von Datenpaketen auf mindestens zwei dieser Kommunikationswege aufgeteilt. In der Empfangseinheit wird der über die verschiedenen Kommunikationswege übertragene Datenfluss wieder verbunden. Geeignete Informationen, auf deren Basis die Aufteilung des Datenflusses erfolgt, sind Preise und Geschwindigkeit der Kommunikationswege, erlaubte Datenpaketgrößen, Transportzeit, Informationen zu zwischengeschalteten Übermittlungseinheiten und durch den Nutzer vorgegebene Prioritäten. Hierdurch sollen die Kapazitäten der zur Verfügung stehenden Kommunikationssysteme besser genutzt werden. Entsprechend kommen als verschiedene Kommunikationswege beispielsweise HSCSD, GPRS, Bluetooth, WLAN oder dergleichen in Frage.

Das Dokument: GUSTAFSSON E ET AL: "A LITERATURE SURVEY ON TRAFFIC DISPERSION", XP000683450, offenbart ein Verfahren um die Leistungsfähigkeit beim Datentransfer zu erhöhen, wobei mit Hilfe von Verkehrsverteilung der Datenverkehr aufgeteilt und über mehrere Pfade parallel vom Sender zum Empfänger übertragen wird.

Das Dokument: YEUNG R W ET AL: "Network Coding Theory", XP007917634, befasst sich mit dem Thema der logischen Kodierung von Daten in zyklischen und azyklischen Netzwerken (Network Coding).

Trotz der besseren Kapazitätsauslastung der zur Verfügung stehenden Kommunikationswege wird die Übertragungssicherheit jedoch nicht verbessert. Im Gegenteil können bei dem Zusammenfügen der Daten aus den verschiedenen Datenpaketen Lücken entstehen, die zum Datenverlust führen. Daher ist die Übertragung für sicherheitsrelevante Daten nicht zuverlässig einsetzbar.

Aufgabe der vorliegenden Erfindung ist es daher, die Datensicherheit bei einer Datenübertragung mittels nicht drahtgebundener Übertragungswege im Kraftfahrzeug zu verbessern.

Diese Aufgabe wird durch ein Verfahren gemäß den Merkmalen des Anspruchs 1 und eine Vorrichtung bzw. ein System gemäß den Merkmalen des Anspruchs 9 gelöst.

Es ist insbesondere vorgesehen, dass von zu übertragenden Daten Redundanzdaten erzeugt werden, welche eine Rekonstruktion der zu übertragenden Daten bei dem Ausfall einer Kommunikationsroute erlauben. Diese Redundanzdaten und die gegebenenfalls auch selbst noch aufgeteilten, zu übertagenden Daten werden aufgeteilt über verschiedene Kommunikationsrouten innerhalb des Kraftfahrzeugs übertragen.

Die einfachste Kommunikationsroute wird bei einer Funk-Kommunikation durch eine direkte Kommunikation zwischen dem sendenden und dem empfangenden Datenknoten gebildet. Andere Kommunikationsrouten werden über Zwischenknoten realisiert, welche die Funktion eines Routers haben und die von dem sendenden Datenknoten ausgesendeten Daten empfangen und erneut aussenden, damit der empfangende Datenknoten diese Daten empfangen kann. Diese Zwischenknoten können als reine Router mit Sende- und Empfangsteil ausgebildet sein, die an verschiedenen Positionen des Fahrzeugs positioniert sind. Die Zwischenknoten mit Router-funktion können auch Zusatzfunktionen aufweisen oder in andere Fahrzeugkomponenten mit integriert sein, sodass diese sowohl die Funktion eines sendenden oder empfangenden Datenknotens als auch eines Routers aufweisen können.

Indem die zu übertragenden Daten und die hieraus abgeleiteten Redundanzdaten über mindestens zwei verschiedene Kommunikationsrouten gesendet werden, ist es möglich, diese Daten bei Ausfall einer Kommunikationsroute zuverlässig zu rekonstruieren. Durch die Verwendung einer Kombination mehrerer Kommunikationsrouten von dem sendenden Datenknoten zu dem empfangenden Datenknoten ist die Gesamtverbindung so gegenüber Störungen zumindest einer der Kommunikationsrouten robust. Dies gilt auch für den Fall, dass im Normalfall eine direkte Verbindung zwischen dem sendenden und dem empfangenden Datenknoten besteht, da diese bspw. durch eine bei Beladung des Fahrzeugs zeitweilig eingebrachte Abschirmung gestört werden kann, auch wenn diese den Vorteil hat, dass Zwischenknoten nicht ausfallen können.

Gegenüber drahtgebundenen Kommunikationsverbindungen, beispielsweise auch drahtgebundener Bus-Kommunikation, zwischen den einzelnen Komponenten des Fahrzeugs ergibt sich der Vorteil, dass auf das Ziehen von Kabelsträngen verzichtet werden kann und die Einbindung neuer Komponenten in ein Funknetz beispielsweise im Rahmen von Ad-Hoc-Netzwerken mit gängiger Technologie möglich ist. Gleichzeitig wird durch die erfindungsgemäß geschaffenen Redundanzen eine zuverlässige Datenübertragung erreicht.

Erfindungsgemäß kann die Übertragung der zu übertragenden (eigentlichen) Daten, d. h. der gewünschten Informationen, und der Redundanzdaten insbesondere zeitgleich oder in unmittelbarer zeitlicher Nähe über die verschiedenen Kommunikationsrouten stattfinden. Die insbesondere aus unidirektionalen Funkkommunikationssystemen bekannte Mehrfachaussendung von Kommunikationsbotschaften in stochastisch variierten Zeitintervallen soll dabei vorzugsweise nicht zu Redundanzzwecken genutzt werden. Diese ist für die Kommunikation von Komponenten in Fahrzeugen in vielen Fällen nicht geeignet, weil eine schnelle und unmittelbare Weiterleitung der Informationen notwendig ist.

Gemäß einer besonders einfachen Ausführungsform des erfindungsgemäß vorgeschlagenen Verfahrens können die Redundanzdaten mindestens eine, gegebenenfalls aber auch mehrere, Kopien der zu übertragenden Daten sein. Diese Redundanzdaten und die zu übertragenden (eigentlichen) Daten werde dann über verschiedene Kommunikationsrouten gesendet, wobei beispielsweise ein Datensatz einer Kommunikationsroute zugeordnet werden kann. Ein Datensatz besteht dann aus den zu übertragenden Daten bzw. aus einer Kopie der zu übertragenden Daten, d. h. den Redundanzdaten. In diesem Fall können die zu übertragenden Daten und die Kopie bzw. Kopien der zu übertragenden Daten also jeweils vollständig über eine eigene Kommunikationsroute übertragen werden.

Bei insgesamt vorzugsweise drei Kommunikationsrouten lässt sich so also eine doppelte Redundanz erreichen, da die zu übertragenden Daten und zwei Kopien der zu übertragenden Daten als doppelte Redundanzdaten übertragen werden können. Hierdurch kann eine besonders große Sicherheit erreicht werden, weil nur eine der drei Kommunikationsrouten eine erfolgreiche Kommunikation durchführen muss, damit die gewünschten Informationen an dem empfangenden Datenknoten vorliegen. Dies gilt - mit anderen erreichbaren Redundanzen - natürlich auch für eine andere Anzahl von Kommunikationsrouten. Bei dieser Ausführungsform findet jedoch trotz Verwendung mehrerer Kommunikationsrouten für die Datenübertragung keine Erhöhung der Übertragungsrate statt. Die Geschwindigkeit der Übertragung für die zu übertragenden Daten bleibt trotz einer Erhöhung der potentiell möglichen Datenrate also gleich.

Um eine ausgewogenere Balance zwischen Sicherheit (Grad der Redundanz) und Geschwindigkeit (Grad der Übertragungsrate) bei der Kommunikation zu erreichen, schlägt eine besonders bevorzugte Weiterbildung des erfindungsgemäßen Verfahrens vor, dass auch die zu übertragenden Daten aufgeteilt und für verschiedene Teile der zu übertragenden Daten unterschiedliche Kommunikationsrouten verwendet werden. In diesem Fall werden also nicht nur die zu übertragenden Daten und die Redundanzdaten aufgeteilt und über verschiedene Kommunikationsrouten gesendet, sondern auch die zu übertragenden Daten selbst gesplittet und als Teildaten über verschiedene Kommunikationsrouten übertragen. Hierdurch lässt sich die Geschwindigkeit der Übertragung insgesamt erhöhen, weil eine Aufteilung und Parallelübertragung der zu übertragenden Daten erfolgt. Die Redundanzdaten werden dabei wie bereits beschrieben zusätzlich erzeugt und über die Kommunikationsrouten mit übertragen.

Eine konkrete Möglichkeit, zur Erzeugung von Redundanzdaten besteht für diese Ausführungsform darin, dass diese Redundanzdaten durch eine logische Verknüpfung mit den oder allen verschiedenen Teil (Teildaten) der zu übertragenen Daten gebildet werden. Beispielsweise kann eine bitweise XOR-Verknüpfung eines Teils oder aller der verschiedenen Teildaten der zu übertragenden Daten erfolgen, wobei das Ergebnis "0" oder "1" der Verknüpfung erfindungsgemäß davon abhängen kann, ob in den berücksichtigten verschiedenen Teildaten an der jeweiligen Bitposition eine gerade oder ungerade Anzahl von "0" oder "1" Einträgen vorliegt.

Sofern diese XOR-Verknüpfung gleichzeitig auf alle verschiedenen Teile (Teildaten) der zu übertragenden Daten angewendet wird, lässt sich zumindest bei Wegfall nur einer Kommunikationsverbindung eine Rekonstruktion der verlorengegangenen Daten erreichen. Besonders vorteilhaft ist es jedoch, wenn die Anzahl der verschiedenen Teile (Teildaten) vorgebbar ist, die durch Redundanzdaten wiederherstellbar sein sollen. In diesem Fall ist es auch möglich, eine Teilauswahl aus der Gesamtzahl der verschiedenen Teile (Teildaten) auszuwählen und für diese verschiedenen Teile der zu übertragenden Daten jeweils Redundanzdaten zu bilden. Dann kann auch bei Ausfall mehrerer Kommunikationsrouten noch eine Rekonstruktion der Daten erreicht werden.

Dies soll nachfolgend an einem Beispiel erläutert werden. Wenn beispielsweise drei Kommunikationsrouten zur Verfügung stehen und somit drei verschiedene Teile der zu übertragenden Daten (Teildaten) gebildet werden, kann vorgegeben werden, dass Redundanzdaten zwischen dem ersten und dem zweiten, weitere Redundanzdaten zwischen dem zweiten und dem dritten und weitere Redundanzdaten zwischen dem dritten und dem ersten Teil der Teildaten erzeugt werden. Diese Redundanzdaten werden dann mit den zu übertragenden Daten auf geeignete Weise auf die zur Verfügung stehenden Kommunikationsrouten verteilt, so dass bei Ausfall auch zweier Kommunikationsverbindungen insgesamt eine Rekonstruktion der Daten möglich ist.

Indem die Anzahl der verschiedenen Teile (Teildaten) vorgebbar ist, die durch Redundanzdaten wiederherstellbar sein soll, findet erfindungsgemäß also eine Einstellung der Redundanzstufe statt. Es gilt, dass die erreichte Redundanz umso größer wird, je kleiner die Anzahl (Menge) der verschiedenen Teile (Teildaten) ist, die durch Redundanzdaten wiederherstellbar sein soll. Je größer die Redundanz ist, desto kleiner wird aber die Datenrate, d. h. der zeitliche Gewinn bei der Übertragung durch Aufteilung der übertragenden Daten selbst auf mehrere Kommunikationsrouten.

Die verschiedenen Teile der zu übertragenden Daten und die Redundanzdaten werden dann durch ein geeignetes Verschachtelungsschema auf die drei bzw. allgemeiner die zur Verfügung stehenden Kommunikationsrouten verteilt. Die Auswahl der Redundanzstufe kann erfindungsgemäß für jeden Knoten einzeln vorgebbar und damit für verschiedene Daten und/oder Zwischenknoten auch verschieden sein.

In einem konkreten Beispiel soll der sendende Datenknoten A mit dem empfangenden Datenknoten B Daten austauschen. Hierzu sendet der sendende Datenknoten A die Daten auf drei unterschiedlichen Kommunikationsrouten zu dem empfangenden Knoten B. Zusätzlich werden die Redundanzdaten so auf die drei Kommunikationsrouten verteilt, dass die Gesamtrate das Doppelte der Datenrate einer Kommunikationsroute ist und nicht nur der einfachen Datenrate eine Kommunikationsroute entspricht, wie es bei gleichen Daten auf den drei Kommunikationsrouten gemäß der einfachsten vorbeschriebenen Ausführungsform der Fall wäre.

Erfindungsgemäß kann auf diese Weise eine sehr gute Einstellung der Kommunikationsparameter Geschwindigkeit gegen Robustheit abgewogen werden, wobei die Einstellung für jeden teilnehmenden Datenknoten oder Zwischenknoten im Netzwerk unterschiedlich vorgebbar sein kann, beispielsweise aufgrund der Häufigkeit auftretender Störungen oder mittels durch den Benutzer einstellbarer Vorgaben.

Eine besonders vorteilhafte Ausgestaltung des vorgeschlagenen Verfahrens sieht vor, dass die zu übertragenden Daten und die Redundanzdaten jeweils in Datenpaketen übertragen werden, wobei die Redundanzdaten in diesem Fall vorzugsweise aus den Datenpaketen der zu übertragenen Daten gebildet werden. Die in den Datenpaketen zusammengefassten Daten stellen einfach zu handhabende Bitfolgen dar, sodass das Erzeugen der Redundanzdaten ohne großen Aufwand möglich ist. Außerdem lassen sich die einzelnen Datenpakete der zu übertragenden Daten einfach einer Kommunikationsroute zuordnen, so dass die aus den Datenpaketen der zu übertragenen Daten erzeugten Redundanzdaten geschickt auf andere Kommunikationsrouten verteilt werden können, um die gewünschte Redundanz zuverlässig zu erreichen.

Ferner ist es vorteilhaft, die Auswahl der verwendeten Kommunikationsrouten statisch und/oder dynamisch vorzunehmen. Die statische Auswahl einer Kommunikationsroute bedeutet, dass die Router bzw. Zwischenknoten, d. h. die Empfänger und Sender zum Empfangen und Wiederaussenden von Datentelegrammen, fest vorgegeben sind. Da vorzugsweise die Position der einzelnen Daten- und/oder Zwischenknoten in dem Fahrzeug bekannt ist, können so alternative Routen ausgewählt werden, die räumlich verschiedene Ausbreitungsrichtungen aufweisen, so dass bei einer temporären Abschirmung der einen Kommunikationsroute mit einer gewissen Wahrscheinlichkeit die andere Kommunikationsroute funktioniert. Alternativ kann die Kommunikationsroute auch dynamisch anhand von Kriterien ausgewählt werden.

Der Vorteil einer statischen Kommunikationsrouten-Vorgabe liegt darin, dass die Routen eine maximale räumliche Trennung aufweisen und auch die Ressourcen der einzelnen Netzwerkknoten auswogen verwendet werden können. Die dynamische Kommunikationsrouten-Vorgabe hat dagegen den Vorteil, dass kleinere Störungen einer Kommunikationsroute umgangen werden können, ohne dass ein Redundanzverlust eintritt. Allerdings ist bei der dynamischen Routenwahl nicht gewährleistet, dass die für das Routing benutzten Ressourcen der einzelnen Knoten (Zwischenknoten) bzw. in den Kommunikationsweg zwischengeschalteten Komponenten mit Routingfunktion gleichmäßig ausgenutzt werden. Das dynamische Routing kann zu Lastspitzen der einzelnen Knoten und damit Verzögerungen der Übertragung führen.

Daher wird bevorzugt eine Variante vorgeschlagen, die eine Kombination einer statischen Kommunikationsrouten-Vorgabe mit einem eingeschränkten dynamischen Routing ist, das beispielsweise dadurch beschränkt wird, dass eine dynamische Auswahl von nur vorgegebenen Knoten erlaubt wird. Hierdurch können kleinräumige Störungen umgangen werden, wobei gleichzeitig eine räumliche Trennung der verschiedenen Kommunikationsrouten erhalten bleibt.

Insbesondere im Rahmen einer dynamischen oder teildynamischen Auswahl der verwendeten Kommunikationsrouten ist es vorteilhaft, wenn jeder Knoten (Datenknoten, Zwischenknoten bzw. Router) seine Position im Fahrzeug kennt. Dies ermöglicht eine positionsselektive Kommunikationsroutenwahl durch Auswahl der verschiedenen an der Kommunikationsroute beteiligten Knoten.

Besonders bevorzugt kann die nicht drahtgebundene Kommunikation eine Ultra-Wide-Band-Kommunikation (UWB-Kommunikation) sein, die sich aufgrund ihrer großen Frequenzbandbreite bereits sehr robust gestaltet und die in einem Fahrzeug typischerweise benötigten Funkreichweiten bietet. Als Grundlage für den Netzaufbau können dabei bekannte Techniken verwendet werden, die mit oder ohne ein Mastergerät zur Organisation des Netzwerks auskommen. Diese Techniken sind beispielsweise durch ZigBee, WLAN (IEEE 802.11-Familie), WiMax, Bluetooth, usw. bekannt.

Die vorliegende Erfindung bezieht sich auch auf ein System bzw. eine Vorrichtung zur Übertragung von Daten in einem Kraftfahrzeug gemäß den Merkmalen des Anspruchs 9. Die Übertragung findet mittels nicht drahtgebundener Kommunikation statt. Das System weist einen ersten sendenden Datenknoten und einen zweiten empfangenden Datenknoten und mindestens zwei verschiedene Kommunikationsrouten zur Datenübertragen zwischen dem ersten und dem zweiten Datenknoten auf. Hierzu sind vorzugsweise Zwischenknoten mit Routingfunktion vorgesehen, die die von dem ersten Datenknoten ausgesendeten Daten empfangen und wieder aussenden, damit der zweite Datenknoten (oder ein weiterer Zwischenknoten) diese empfangen kann. Der erste Datenknoten und der zweite Datenknoten weisen jeweils eine Recheneinheit auf, die zur Durchführung einer Übertragung von Daten eingerichtet ist. Entsprechendes gilt auch für die Zwischenknoten.

Erfindungsgemäß sind die Recheneinheit des ersten und des zweiten Datenknotens sowie gegebenenfalls die Recheneinheiten der Zwischenknoten zur Durchführung des vorbeschriebenen Verfahrens oder Teilen hiervon eingerichtet.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von deren Zusammenfassung in den Ansprüchen oder deren Rückbezügen.

Es zeigen:
- Fig. 1: schematisch ein erfindungsgemäßes System zur Übertragung von Daten in einem Kraftfahrzeug;
- Fig. 2: schematisch das Verfahren zur Übertragung von Daten über verschiedene Kommunikationsrouten gemäß einer ersten Ausführungsform;
- Fig. 3: schematisch das Verfahren zur Übertragung von Daten über verschiedene Kommunikationsrouten gemäß einer zweiten Ausführungsform und
- Fig. 4: schematisch die Rekonstruktion von auf einer Kommunikationsroute gemäß Fig. 3 verlorengegangenen Daten.

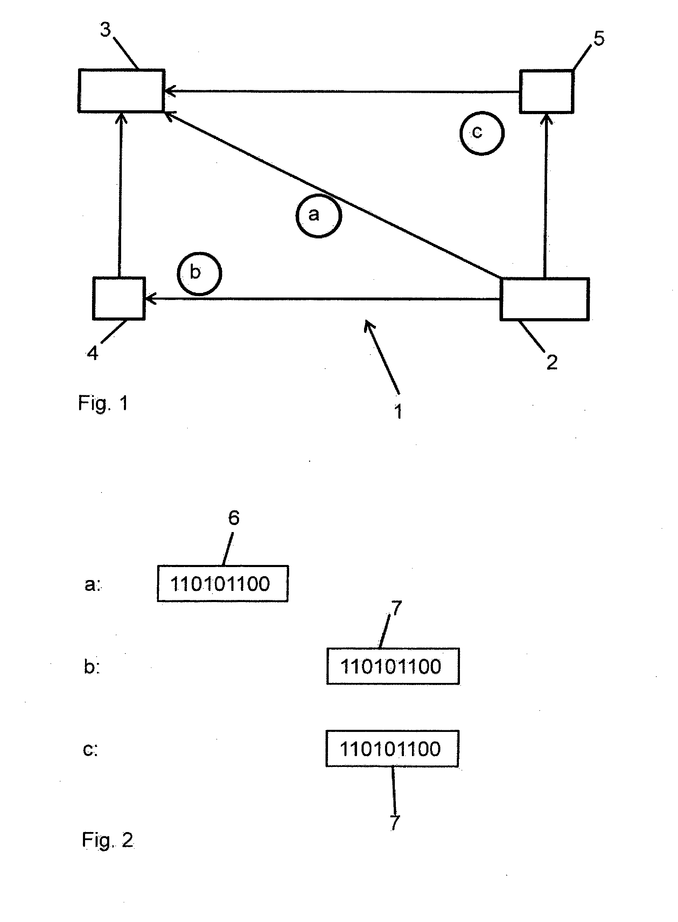

In Fig. 1 ist schematisch ein System beziehungsweise eine Vorrichtung 1 zur drahtlosen Übertragung von Daten in einem Kraftfahrzeug dargestellt. Das System 1 weist einen ersten sendenden Datenknoten 2 und einen zweiten empfangenden Datenknoten 3 auf. Bei dem sendenden Datenknoten 2 kann es sich beispielsweise um eine Rückfahrkamera und bei dem empfangenden Datenknoten 3 kann es sich bspw. um eine Head-Unit handeln.

Von dem ersten Datenknoten 2 zu dem zweiten Datenknoten 3 werden die Daten über verschiedene Kommunikationsrouten a, b, c übertragen. Die erste Kommunikationsroute a sieht eine Direktübertagung von dem ersten Datenknoten 2 zu dem zweiten Datenknoten 3 vor. Die zweite Kommunikationsroute b überträgt die Daten von dem ersten Datenknoten 2 zu einem Zwischenknoten 4, der die von dem ersten Datenknoten 2 empfangenen Daten im Rahmen einer Router-Funktion wieder aussendet, so dass die Daten durch den zweiten Datenknoten 3 empfangen werden können. Analog ist eine dritte Kommunikationsrute c mit einem Zwischenknoten 5 vorgesehen.

Die jeweils zwischen den Knoten 2, 3, 4 und 5 stattfindenden Übertragungen sind durch Pfeile gekennzeichnet.

Der erste Datenknoten 2 und der zweite Datenknoten 3 weisen jeweils eine Recheneinheit zur Durchführung einer Übertragung von Daten auf, die nachfolgend noch genauer beschrieben wird. Entsprechendes gilt für die eine Routing-Funktion erfüllenden Zwischenknoten 4 und 5, die auch jeweils eine Recheneinheit aufweisen. Ferner sind die Datenknoten in der erforderlichen Weise mit einem Sender und/oder Empfänger ausgestattet, um Daten senden und/oder empfangen zu können. Weder die Recheneinheiten noch die Sender/Empfänger sind der Einfachheit halber in Fig. 1 dargestellt.

Die Übertragung findet in dem in Fig. 1 dargestellten Beispiel mittels einer Ultra-Wide-Band-Kommunikation (UWB-Kommunikation) statt, die aufgrund einer großen Frequenzbandbreite recht robust gegen Störungen des Frequenzbandes ist und für eine kurzreichweitige Kommunikation innerhalb eines Fahrzeugs besonders geeignet ist. Die Erfindung ist jedoch nicht auf diese Art der Kommunikation beschränkt und lässt sich insbesondere für alle drahtlosen Kommunikationssysteme einsetzen. Grundsätzlich wäre es sogar denkbar, das erfindungsgemäß vorgeschlagene System auch im Rahmen einer drahtgebundenen Kommunikation einzusetzen, auch wenn bei einer solchen drahtgebundenen Kommunikation die Ausfallwahrscheinlichkeit für einen Kommunikationsweg wesentlich geringer ist und der Vorteil der vorliegenden Erfindung daher insbesondere im Zusammenhang mit einer Drahtloskommunikation genutzt werden kann.

Die im Rahmen des Systems 1 eingesetzten Recheneinheiten sind zur Durchführung des nachfolgend beschriebenen Verfahrens eingerichtet, bei dem die Daten von dem ersten sendenden Datenknoten 2 aufgeteilt und über in diesem Fall drei verschiedene Kommunikationsrouten a, b, c zu einem zweiten empfangenden Datenknoten 3 übertragen und beim Empfangen wieder zusammengesetzt werden. Die Daten, welche insgesamt übertragen werden, setzen sich zusammen aus zu übertragenden Daten und Redundanzdaten, die aus den zu übertragenen Daten erzeugt werden.

Dies ist in einem einfachen Beispiel in Fig. 2 dargestellt. Die Redundanzdaten 7 erlauben eine Rekonstruktion der zu übertragenden Daten 6 bei dem Ausfall einer Kommunikationsroute a, b, c und werden gemeinsam mit den zu übertragenden Daten 6 über die verschiedenen Kommunikationsrouten a, b, c übertragen.

In Fig. 2 sind die verschiedenen Kommunikationsrouten a, b, c untereinander dargestellt. Auf der Kommunikationsroute a sollen die zu übertragenden Daten 6 übertragen werden. Diese sind zu einem Datenpaket zusammengefasst und stellen eine Bitfolge "110101100" dar. Um von diesen zu übertragenden Daten 6 Redundanzdaten 7 zu erzeugen, werden diese zu übertragenden Daten 6 in dem dargestellten Beispiel einfach kopiert, so dass die Redundanzdaten 7 jeweils eine Kopie der zu übertragenen Daten 6 darstellen. Diese Redundanzdaten 7 werden jeweils über die Kommunikationsrouten b und c übertragen. Die Datenübertragung wird also insgesamt auf die zur Verfügung stehenden Kommunikationsrouten a, b, c aufgeteilt, wobei die zu übertragenden Daten 6 über die Kommunikationsroute a und die Redundanzdaten 7 über die Kommunikationsrouten b, c übertragen werden.

Die Kommunikationsroute a, b, c sind, wie in Fig. 1 schematisch dargestellt, räumlich voneinander getrennt, wobei die Kommunikationsrouten b, c durch Auswahl bestimmter Zwischenknoten 4, 5 definiert sind, die vorzugsweise statisch oder im Wesentlichen statisch mit gewissen dynamischen Ausweichmöglichkeiten definiert sind. Hierdurch ist es möglich, neben der direkten Kommunikationsroute a bspw. eine Kommunikationsroute b über die linke Fahrzeugseite und eine Kommunikationsroute c über die rechte Fahrzeugseite auszuwählen.

Dies hat den Vorteil, dass auch bei einer durch Zuladung entstandenen Abschirmung einer der Kommunikationsrouten a, b, c eine zuverlässige Übertragung der Daten stattfindet, da entweder die zu übertragenden Daten 6 oder die eine Kopie dieser zu übertragenden Daten 6 als Redundanzdaten 7 den zweiten empfangenden Datenknoten 3 erreichen, welcher die über die verschiedenen Kommunikationsrouten a, b, c aufgeteilt übertragenen Daten wieder zusammensetzt. In diesem einfachen Beispiel gemäß Fig. 2 besteht das Zusammensetzen der Daten einfach aus der Auswahl der auf einer Kommunikationsroute a, b oder c übertragenen Daten.

In diesem Beispiel wird eine Redundanz der Daten erzeugt, da eine vollständige Rekonstruktion der Daten möglich ist, selbst wenn nur eine der drei Kommunikationsrouten a, b, c funktioniert. Hier wird durch das erfindungsgemäße Verfahren also eine doppelte Redundanz geschaffen, wobei ein möglicher Zeitgewinn bei der Übertragung durch Nutzen dreier paralleler Kommunikationsrouten a, b, c nicht verwirklicht wird.

Um zusätzlich den durch die Schaffung paralleler Kommunikationsrouten a, b, c geschaffene Kapazitätssteigerung bei der Übertragung auszunutzen und eine insgesamt schnellere Übertragung der zu übertragenden Daten 6 zu erreichen, kann entsprechend einem anderen Beispiel der vorliegenden Erfindung vorgesehen sein, die zu übertragenden Daten 6 selbst aufzusplitten und über verschiedene Kommunikationsrouten a, b, c zu übertragen.

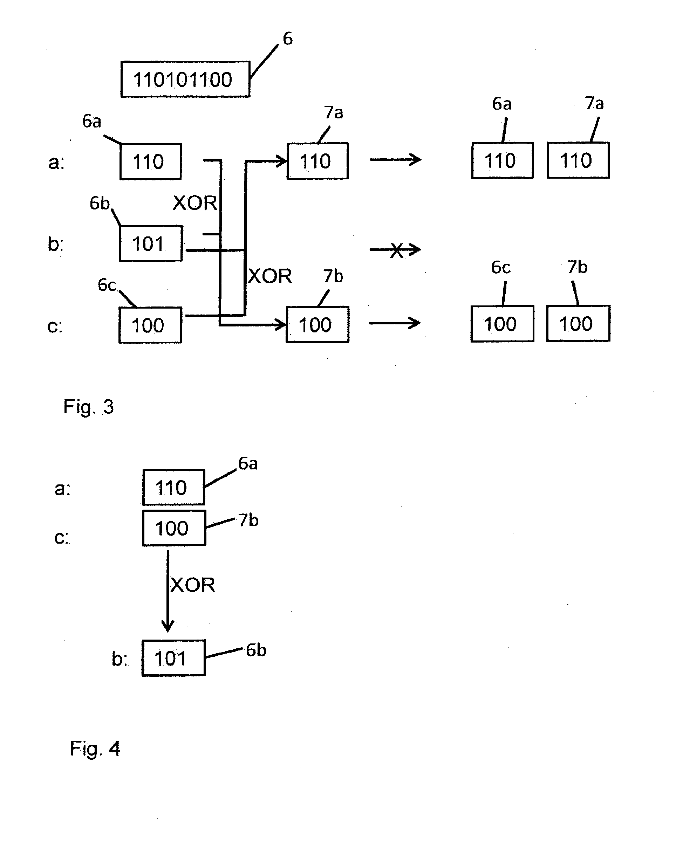

Dies ist in Fig. 3 beispielhaft dargestellt. Dort wird die Bitfolge der zu übertagenden Daten 6 in Pakete zu übertragender Teildaten 6a, 6b, 6c zerlegt, wobei jeweils drei aufeinanderfolgende Bits der Bitfolge zu einem Teildatenpaket 6a, 6b, 6c zusammengefasst werden. Diese Teildaten 6a, 6b, 6c werden über die verschiedenen Kommunikationsrouten a, b, c derart übertragen, dass die Teildaten 6a über die Kommunikationsroute a, die Teildaten 6b über die Kommunikationsroute b und die Teildaten 6c über die Kommunikationsroute c übertragen werden. Dies kann beispielsweise in Form von Datenpaketen erfolgen.

Zur Erzeugung der Redundanzdaten werden jeweils Redundanzdaten von zwei der insgesamt drei Teildaten 6a, 6b bzw. 6b, 6c durch eine "XOR"-Verknüpfung dieser Teildaten gebildet, bei der bitweise überprüft wird, ob eine gerade Anzahl oder ungerade Anzahl von "1"-Einträgen an einer Stelle aller bei der Bildung der Redundanzdaten berücksichtigten Teildaten 6a, 6b für die Redundanzdaten 7a bzw. 6b, 6c für die Redundanzdaten 7b vorliegt. Bei einer geraden Anzahl, zu der auch die Anzahl Null von Bitwerten "1" gerechnet wird, wird in den Redundanzdaten an der entsprechenden Bit-Position der Redundanzdaten 7a, 7b der Bitwert "1" zugewiesen. Bei einer ungeraden Anzahl von Bitwerten "1" in den berücksichtigten Teildaten 6a, 6b bzw. 6b, 6c wird der Bitwert "0" in den Redundanzdaten 7a, 7b erzeugt. Dies ist in Fig. 3 dargestellt.

Anschließend werden die zu übertragenden Teildaten 6a, 6b, 6c und die Redundanzdaten 7a, 7b aufgeteilt über die Kommunikationsrouten a, b, c übertragen, wobei insofern eine Verschachtelung stattfindet, als die Redundanzdaten 7a zu den zu übertragenden Teildaten 6a, 6b auf der jeweils verbleibenden Kommunikationsroute c bzw. die Redundanzdaten 7b zu den zu übertragenden Teildaten 6b, 6c auf der Kommunikationsroute a übertragen werden. Dies ermöglicht es, bei Ausfall einer der Kommunikationsrouten a, b, c die Daten insgesamt wiederherzustellen.

Diese Rekonstruktion ist in Fig. 4 für den in Fig. 3 angedeuteten Fall erläutert, dass die Kommunikationsroute b gestört ist.

In diesem Fall kann der empfangende Datenknoten 3 den mittleren Teil der zu übertagenden Daten 6 nicht unmittelbar durch Zusammensetzen der über die Kommunikationsrouten a, b, c übertragenen Teildaten 6a, 6b, 6c erzeugen, weil die Teildaten 6b bei dem empfangenden Datenknoten 3 nicht vorliegen. In diesem Fall können die verloren gegangenen Teildaten 6b aber durch die über die Kommunikationsroute a empfangenen Teildaten 6a und die über die Kommunikationsroute c empfangenden Redundanzdaten 7b rekonstruiert werden.

Dazu wird dieselbe "XOR"-Verknüpfung auf die Teildaten 6a und die Redundanzdaten 7b angewendet. Hieraus ergibt sich das in Fig. 4 dargestellte Teildatenpaket "101", welches mit dem Teildatenpaket 6b der aufgeteilten bzw. aufgesplitteten zu übertragenden Daten 6 übereinstimmt.

Dies soll nachfolgend noch einmal bitweise erläutert werden. An der ersten Bit-Position weisen die Teildaten 6a und die Redundanzdaten 7b jeweils den Wert "1" auf, so dass eine gerade Anzahl von Werten "1" vorliegt und der rekonstruierte Bitwert an der ersten Bitstelle auch "1" beträgt. An der zweiten Bit-Position liegt eine ungerade Anzahl von Bitwerten "1" vor, so dass der rekonstruierte Bitwert "0" ist. An der dritten Stelle findet sich gar kein Bitwert "1", der einer geraden Anzahl von "1"-Bitwerten gleichgesetzt ist und die dem Eintrag "1" führt. Damit ergibt sich die rekonstruierte Bitfolge "101", welche den zu übertragenden Teildaten 6b entspricht. Nach dieser Rekonstruktion liegen also sämtliche Teildaten 6a, 6b, 6c in dem empfangenen Datenknoten 3 vor, so dass die zu übertragenden Daten 6 in diesem wieder rekonstruiert werden können.

Erfindungsgemäß kann je nach Vorgabe des Redundanzgrades die Gewichtung zwischen erreichbarer Redundanz und Übertragungsgeschwindigkeit angepasst werden.

Eine andere beispielhafte Verteilung der Teildaten und der Redundanzdaten auf die unterschiedlichen Kommunikationsverbindungen nutzt eine andere zeitliche Abfolge. Hierzu werden die Daten in Pakete (beispielhaft D1 - D6) aufgeteilt. Im ersten Zeitschritt wird nun das Datenpaket D1 über die Kommunikationsroute a, das Datenpaket D2 über die Kommunikationsroute b und eine Redundanzinformation DR12 über die Kommunikationsroute c übertragen. Die Redundanzinformation DR12 ist dabei die bitweise XOR Verknüpfung von D1 und D2. Im nächsten Zeitschritt wird das Datenpaket D3 über die Kommunikationsroute a, die Redundanzinformation DR34 über die Kommunikationsroute b und das Datenpaket D4 über die Kommunikationsroute c übertragen. Die Redundanzinformation DR34 ist wiederum die bitweise XOR Verknüpfung von D3 und D4. Im nächsten Zeitschritt wird die Redundanzinformation DR56 über die Kommunikationsroute a, das Datenpaket D5 über die Kommunikationsroute b und das Datenpaket D6 über die Kommunikationsroute c übertragen, wobei DR56 die bitweise XOR-Verknüpfung von D5 und D6 ist. Im nächsten Zeitschritt beginnt das Sendemuster wieder von vorne.

Bei diesem Sendemuster werden in zeitlicher Abfolge also zunächst Daten auf den Kommunikationsrouten a und b und Redundanzinformation auf der Kommunikationsroute c übertragen. In dem nächsten Sendezeitschritt folgen Daten auf den Kommunikationsrouten a und c und Redundanzinformationen auf der Kommunikationsroute b. Im nächsten Sendezeitschritt folgen Daten auf den Kommunikationsrouten b und c und Redundanzinformationen auf der Kommunikationsroute a.

Fällt bei diesem Sendemuster eine der Kommunikationsrouten aus, so werden in jedem Zeitschritt entweder sowieso alle Daten empfangen (weil der Redundanzkanal fehlt) oder es kann das fehlenden Datenpaket über das empfangene Datenpaket und die empfangenen Redundanzdaten rekonstruiert werden.

Von besonderem Vorteil bei dem Einsatz des erfindungsgemäßen Verfahrens bei einer Drahtloskommunikation im Fahrzeug ist der Wegfall der Stecker an den Komponenten, abgesehen von der notwendigen Stromversorgung, und damit eines großen Kosten- und Bauraumfaktors. Die eingesparten Kabel bedeuten auch eine große Gewichtsersparnis und tragen daher zu günstigen Verbrauchswerten bei. Außerdem ist es einfach möglich, weitere Kommunikationsteilnehmer in das Kommunikationsnetz zu integrieren und eine große Anzahl von Komponentenkonfigurationen abzudecken. Zusätzlich können Gateways eingespart werden, da die Drahtlosschnittstelle als quasi-Gateway fungiert.

## Patentansprüche

1. Verfahren zur Übertragung von Daten in einem Kraftfahrzeug mittels nicht drahtgebundener Kommunikation, bei dem die Daten von einem ersten sendenden Datenknoten (2) aufgeteilt und über mindestens zwei verschiedene Kommunikationsrouten (a, b, c) zu einem zweiten empfangenden Datenknoten (3) übertragen und beim Empfang wieder zusammengesetzt werden, und dass von zu übertragenden Daten (6, 6a, 6b, 6c) Redundanzdaten (7, 7a, 7b) erzeugt werden, welche eine Rekonstruktion der zu übertragenden Daten (6, 6a, 6b, 6c) bei dem Ausfall einer Kommunikationsroute (a, b, c) erlauben, und dass diese Redundanzdaten (7, 7a, 7b) und die zu übertragenden Daten (6, 6a, 6b, 6c) über die verschiedenen Kommunikationsrouten übertragen werden, **dadurch gekennzeichnet, dass** die Redundanzdaten (7a, 7b), durch eine logische Verknüpfung von verschiedenen Teilen der zu übertragenden Daten (6a, 6b, 6c) gebildet werden, wobei durch eine Vorgabe des Redundanzgrades die Gewichtung zwischen erreichbarer Redundanz und Übertragungsgeschwindigkeit angepasst wird.

2. Verfahren nach Anspruch 1, **dadurch gekennzeichnet, dass** die Redundanzdaten (7) eine Kopie der zu übertragenden Daten (6) sind und die Redundanzdaten (7) und die zu übertragenden Daten (6) über verschiedene Kommunikationsrouten (a, b, c) gesendet werden.

3. Verfahren nach Anspruch 1, **dadurch gekennzeichnet, dass** die zu übertragenden Daten (6a, 6b, 6c) aufteilt werden und für verschiedene Teile der zu übertragenden Daten (6a, 6b, 6c) unterschiedliche Kommunikationsrouten (a, b, c) verwendet werden.

4. Verfahren nach Anspruch 3, **dadurch gekennzeichnet, dass** die Redundanzdaten (7a, 7b) durch eine logische Verknüpfung von verschiedenen Teilen der zu übertragenden Daten (6a, 6b, 6c) gebildet werden.

5. Verfahren nach Anspruch 4, **dadurch gekennzeichnet, dass** die Anzahl der verschiedenen Teile (6a, 6b, 6c) vorgebbar ist, die durch Redundanzdaten (7a, 7b) wiederherstellbar sein soll.

6. Verfahren nach einem der vorhergehenden Ansprüche, **dadurch gekennzeichnet, dass** die zu übertragenden Daten (6, 6a, 6b, 6c) und die Redundanzdaten (7, 7a, 7b) jeweils in Datenpaketen übertragen werden, wobei die Redundanzdaten (7, 7a, 7b) aus den Datenpaketen der zu übertragenden Daten (6, 6a, 6b, 6c) gebildet werden.

7. Verfahren nach einem der vorhergehenden Ansprüche, **dadurch gekennzeichnet, dass** die Auswahl der verwendeten Kommunikationsrouten (a, b, c) statisch und/oder dynamisch erfolgt.

8. Verfahren nach einem der vorhergehenden Ansprüche, **dadurch gekennzeichnet, dass** die nicht drahtgebundene Kommunikation eine Ultra-Wide-Band-Kommunikation ist.

9. System zur Übertragung von Daten in einem Kraftfahrzeug mittels nicht drahtgebundener Kommunikation, mit einem ersten sendenden Datenknoten (2) und einem zweiten empfangenden Datenknoten (3) und mindestens zwei verschiedenen Kommunikationsrouten (a, b, c) zur Datenübertragung zwischen dem ersten und dem zweiten Datenknoten (2, 3), wobei der erste Datenknoten (2) und der zweite Datenknoten (3) jeweils eine zur Durchführung einer Übertragung von Daten eingerichtete Recheneinheit aufweisen, **dadurch gekennzeichnet, dass** die Recheneinheit des ersten Datenknotens (2) und die Recheneinheit des zweiten Datenknotens (3) zur Durchführung des Verfahrens nach einem der Ansprüche 1 bis 8 eingerichtet ist.

## Claims

1. Method for transmitting data in a motor vehicle by means of wireless communication, in which the data from a first transmitting data node (2) are divided and are transmitted via at least two different communication routes (a, b, c) to a second receiving data node (3) and are reassembled upon reception, and of data (6, 6a, 6b, 6c) to be transmitted redundant data (7, 7a, 7b) are generated which allow a reconstruction of the data (6, 6a, 6b, 6c) to be transmitted in the case of a failure of a communication route (a, b, c) and these redundant data (7, 7a, 7b) and the data (6, 6a, 6b, 6c) to be transmitted are transmitted via the different communication routes, **characterized in that** the redundant data (7a, 7b) are formed by a logical operation on different parts of the data (6a, 6b, 6c) to be transmitted, the weighting between achievable redundancy and transmission speed being adapted by specifying the degree of redundancy.

2. Method according to Claim 1, **characterized in that** the redundant data (7) are a copy of the data (6) to be transmitted and the redundant data (7) and the data (6) to be transmitted are transmitted via different communication routes (a, b, c).

3. Method according to Claim 1, **characterized in that** the data (6a, 6b, 6c) to be transmitted are divided and different communication routes (a, b, c) are used for different parts of the data (6a, 6b, 6c) to be transmitted.

4. Method according to Claim 3, **characterized in that** the redundant data (7a, 7b) are formed by a logical operation on different parts of the data (6a, 6b, 6c) to be transmitted.

5. Method according to Claim 4, **characterized in that** the number of different parts (6a, 6b, 6c) which is intended to be reconstructable by redundant data (7a, 7b) is predeterminable.

6. Method according to one of the preceding claims, **characterized in that** the data (6, 6a, 6b, 6c) to be transmitted and the redundant data (7, 7a, 7b) are transmitted in each case in data packets, the redundant data (7, 7a, 7b) being formed from the data packets of the data (6, 6a, 6b, 6c) to be transmitted.

7. Method according to one of the preceding claims, **characterized in that** the selection of the communication routes (a, b, c) used is carried out statically and/or dynamically.

8. Method according to one of the preceding claims, **characterized in that** the wireless communication is an ultra-wide-band communication.

9. System for transmitting data in a motor vehicle by means of wireless communication, comprising a first transmitting data node (2) and a second receiving data node (3) and at least two different communication routes (a, b, c) for transmitting data between the first and the second data node (2, 3), the first data node (2) and the second data node (3) in each case having a computing unit configured for performing a transmission of data, **characterized in that** the computing unit of the first data node (2) and the computing unit of the second data node (3) is configured to perform the method according to one of Claims 1 to 8.

## Revendications

1. Procédé de transmission de données dans un véhicule automobile au moyen d'une communication non sur fil, dans lequel on répartit les données par un premier noeud (2) de données émetteur et on les transmet par l'intermédiaire d'au moins deux voies (a, b, c) de communication différentes à un deuxième noeud (3) de données récepteur et on les réunit à nouveau à la réception, et en ce que l'on produit, à partir de données (6, 6a, 6b, 6c) à transmettre, des données (7, 7a, 7b) de redondance, qui permettent une reconstruction des données (6, 6a, 6b, 6c) à transmettre, si une voie (a, b, c) de communication est défaillante, et en ce que l'on transmet ces données (7, 7a, 7b) de redondance et les données (6, 6a, 6b, 6c) à transmettre par les voies de communication différentes, **caractérisé en ce que** l'on forme les données (7a, 7b) de redondance par une combinaison logique de différentes parties des données (6a, 6b, 6c) à transmettre, la pondération entre une redondance pouvant être atteinte et une vitesse de transmission étant adaptée par une prescription du degré de redondance.

2. Procédé suivant la revendication 1, **caractérisé en ce que** les données (7) de redondance sont une copie des données (6) à transmettre et on envoie les données (7) de redondance et les données (6) à transmettre par des voies (a, b, c) de communication différentes.

3. Procédé suivant la revendication 1, **caractérisé en ce que** l'on répartit les données (6a, 6b, 6c) à transmettre et on utilise pour des parties diverses des données (6a, 6b, 6c) à transmettre des voies (a, b, c) de communication différentes.

4. Procédé suivant la revendication 3, **caractérisé en ce que** l'on forme les données (7a, 7b) de redondance par une combinaison logique de diverses parties des données (6a, 6b, 6c) à transmettre.

5. Procédé suivant la revendication 4, **caractérisé en ce qu'**on peut donner à l'avance le nombre des diverses parties (6a, 6b, 6c), qui doit pouvoir être reproduit par des données (7a, 7b) de redondance.

6. Procédé suivant l'une des revendications précédentes, **caractérisé en ce que** l'on transmet les données (6, 6a, 6b, 6c) à transmettre et les données (7, 7a, 7b) de redondance, respectivement en paquets de données, les données (7, 7a, 7b) de redondance étant formées à partir des paquets des données (6, 6a, 6b, 6c) à transmettre.

7. Procédé suivant l'une des revendications précédentes, **caractérisé en ce que** l'on effectue le choix des voies (a, b, c) de communication utilisées statiquement et/ou dynamiquement.

8. Procédé suivant l'une des revendications précédentes, **caractérisé en ce que** la communication sans fil est une communication ultra-wide-band.

9. Système de transmission de données dans un véhicule automobile au moyen d'une communication sans fil, comprenant un premier noeud (2) de données émetteur et un deuxième noeud (3) de données récepteur et au moins deux voies (a, b, c) de communication différentes pour la transmission de données entre le premier et le deuxième noeud (2, 3) de données, le premier noeud (2) de données et le deuxième noeud (3) de données ayant respectivement une unité informatique agencée pour effectuer une transmission de données, **caractérisé en ce que** l'unité informatique du premier noeud (2) de données et l'unité informatique du deuxième noeud (3) de données sont agencées pour effectuer le procédé suivant l'une des revendications 1 à 8.
